(19) **Europäisches Patentamt**
**European Patent Office**
**Office européen des brevets**

(11) **EP 1 761 693 B1**

(12) **EUROPÄISCHE PATENTSCHRIFT**

(45) Veröffentlichungstag und Bekanntmachung des Hinweises auf die Patenterteilung:
**12.12.2007 Patentblatt 2007/50**

(51) Int Cl.:
*F01N 11/00* (2006.01)  *F01N 9/00* (2006.01)
*F02D 41/02* (2006.01)

(21) Anmeldenummer: **05755582.3**

(22) Anmeldetag: **15.06.2005**

(86) Internationale Anmeldenummer:
**PCT/EP2005/006390**

(87) Internationale Veröffentlichungsnummer:
**WO 2005/124117 (29.12.2005 Gazette 2005/52)**

(54) **ABSCHÄTZUNG DER TEMPERATUR EINES KATALYSATORS UND ANWENDUNGEN DAFÜR**

ESTIMATION OF THE TEMPERATURE OF A CATALYTIC CONVERTER AND CORRESPONDING APPLICATIONS

ESTIMATION DE LA TEMPERATURE D'UN POT CATALYTIQUE, ET APPLICATIONS CORRESPONDANTES

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **22.06.2004 DE 102004030199**

(43) Veröffentlichungstag der Anmeldung:
**14.03.2007 Patentblatt 2007/11**

(73) Patentinhaber: **GM Global Technology Operations, Inc.**
**Detroit, MI 48265-3000 (US)**

(72) Erfinder:
- **HELMUT, Oswald**
  **55234 Albig (DE)**
- **SCHWERIN, Frank**
  **38102 Braunschweig (DE)**

(74) Vertreter: **Strauss, Peter**
**Adam Opel AG**
**Patent-und Markenrecht /A0-02**
**65423 Rüsselsheim (DE)**

(56) Entgegenhaltungen:
**DE-A1- 19 907 382      US-A- 5 678 402**
**US-A1- 2002 157 380**

## Beschreibung

Die vorliegende Erfindung betrifft ein Verfahren zur Abschätzung der Temperatur eines Katalysators bzw. von möglichen kurzfristigen Anstiegen der Temperatur des Katalysators, Verfahren zum Steuern der Gemischversorgung eines dem Katalysators vorgeschalteten Verbrennungsmotors, die die vorgenannten Verfahren nutzen, sowie ein Motorsteuergerät zur Durchführung eines solchen Verfahrens.

Den Verbrennungsmotoren moderner Kraftfahrzeuge, insbesondere von Ottomotoren, ist ein Abgaskatalysator nachgeschaltet, der dazu dient, im Abgas enthaltene Schadstoffe wie etwa Stickoxide, Kohlenmonoxide und unverbrannte Kohlenwasserstoffe abzubauen. Damit diese Katalysatoren effizient arbeiten, müssen sie bei einer hohen Temperatur und stöchiometrischem Luftverhältnis (Lambda = 1) betrieben werden. Allerdings treten bei den gegenwärtig gebräuchlichen Katalysatoren bei Temperaturen über 950˚ C starke Alterungseffekte auf. Um eine lange Lebensdauer der Katalysatoren zu gewährleisten, müssen daher zu hohe Temperaturen vermieden werden. D. h. die Temperatur des Katalysators muss bekannt sein, und es müssen Wege zur Verfügung stehen, um sie zu beeinflussen.

Aus Kostengründen wird die Katalysatortemperatur bei Serienfahrzeugen nicht gemessen, sondern in einem Motorsteutorsteuergerät berechnet. Ein Verfahren hierfür ist in US 5˚414˚994 beschrieben.

Es ist bekannt, die Temperatur eines solchen Katalysators über das Luftverhältnis des dem Motor zugeführten Gemischs zu steuern. Durch Verwendung eines fetten Gemischs wird die Sauerstoffzufuhr zum Katalysator gedrosselt, infolge dessen wird im Katalysator weniger Wärme durch die katalytische Oxidation der im Abgas enthaltenen restlichen Kohlenwasserstoffe und Kohlenmonoxide freigesetzt. Außerdem reduziert die Anfettung des Gemischs die Temperatur des dem Katalysator zugeführten Abgases, da dieses durch die Verdampfung des im Überschuss zugeführten Kraftstoffs abgekühlt wird.

Aufgrund der damit verbundenen Nachteile im Kraftstoffverbrauch sowie in den.Emissionen ist man allerdings bestrebt, eine solche Gemischanfettung so weit wie möglich zu vermeiden.

Wenn der Verbrennungsmotor eine Zeit lang mit fettem Gemisch betrieben wird, sammeln sich unverbrannte Kohlenwasserstoffe und Kohlenmonoxyd im Katalysator an. Sobald nur geringste Mengen an Sauerstoff in dem dem Katalysator zugeführten Abgasstrom vorhanden sind, d. h. beim Übergang zu magerem Gemisch, werden diese Kohlenwasserstoffe im Katalysator schlagartig umgesetzt, was zu einem entsprechenden Temperaturanstieg führt. Aus DE 199 07 382 ist ein Verfahren zur Abschätzung der Katalysatortemperatur bekannt, das diesen Temperaturanstieg berücksichtigt.

Die Aufgabe der vorliegenden Erfindung ist, ein Betriebsverfahren für einen Vertrennungsmotor vorzuschlagen, das eine Überhitzung eines dem Verbrennungsmotor nachgeschalteten Abgaskatalysators vermeidet.

Diese Aufgabe wird durch ein Verfahren mit den Merkmalen des Anspruchs 1 gelöst.

Weiterentwicklungen der Verfahren sind in den abhängigen Ansprüchen erläutert.

Gegenstand der Erfindung ist ferner ein Motorsteuergerät für einen Verbrennungsmotor, das ein Verfahren wie oben erläutert ausführt.

Einer bevorzugten Ausgestaltung des erfindungsgemäßen Verfahrens zufolge ist ein Reaktand, dessen im Katalysator gespeicherte Menge verfolgt wird, Sauerstoff; in diesem Fall ist die Änderung der Zusammensetzung des Abgases, die zu einer plötzlichen Erwärmung führt, ein Übergang von magerem zu fettem Gemisch. Ein alternativer Reaktand, dessen gespeicherte Menge verfolgt wird, sind unverbrannte Kohlenwasserstoffe und Kohlenmonoxid, deren Menge gemeinsam, berechnet als Kohlenwasserstoff-Äquivalent, erfasst werden kann; in diesem Fall ist die Änderung der Zusammensetzung des Abgases, die zur plötzlichen Erwärmung des Katalysators führt, ein Übergang von fettem zu magerem Gemisch.

Bei einer einfachen Ausgestaltung der erfindungsgemäßen Verfahren wird als innerhalb einer vorgegebenen Zeitspanne frei werdende Reaktionswärme kurzerhand die gesamte in den gespeicherten Reaktanden enthaltene Energie angenommen.

Eine weiterentwickelte Ausgestaltung berücksichtigt, ob innerhalb dieser vorgegebenen Zeitspanne überhaupt genügend komplementäre Reaktanden zum Umsetzen der gespeicherten Reaktanden zugeführt werden, indem sie eine zum momentanen Gasdurchsatz des Katalysators proportionale umgesetzte Menge des gespeicherten Reaktanden annimmt..

Wenn bei dieser letzteren Ausgestaltung die tatsächlich gespeicherte Menge kleiner ist als die unter Berücksichtigung des Abgasdurchsatzes theoretisch umsetzbare Menge, so wird die Erwärmung zweckmäßigerweise anhand der tatsächlich vorhandenen Menge berechnet.

Da sich das Desorptionsverhalten und Wirksamkeit des Katalysators im Laufe der Zeit ändern können, wird bei der Berechnung der Erwärmung zweckmäßigerweise ein von der Alterung des Katalysators abhängiger Ausdruck berücksichtigt, der vorab an einem Referenzkatalysator empirisch ermittelt sein kann.

Die gespeicherte Menge des einen oder anderen Reaktanden kann in einfacher Weise verfolgt werden.durch Bilden des Zeitintegrals eines Ausdrucks, der proportional zu $(\lambda-1)$, wobei $\lambda$ das Luftverhältnis der Verbrennung ist, und zum Gasdurchsatz des Katalysators ist.

Dieser Ausdruck ist vorzugsweise ferner proportional zu einem von der Betriebsgeschichte des Katalysators abhängigen Speicherfaktor. Dieser Speicherfaktor, der eine Sättigung des Katalysators durch den jeweils verfolgten Reaktanden widerspiegelt, kann abhängig vom Luftverhältnis λ, dem Gasdurchsatz des Katalysators und der Zeitspanne, in der fortlaufend fettes bzw. mageres Abgas zugeführt worden ist, sein.

Eine Änderung der Zusammensetzung des Abgases, die zu einer plötzlichen Erwärmung führen kann, ist an einem Vorzeichenwechsel des Ausdrucks (λ-1) erkennbar. Wenn der Integrand des Zeitintegrals von einer ersten Komponente eines das erfindungsgemäße Verfahren durchführenden Steuergeräts ermittelt wird und das Integral von einer zweiten Komponente gebildet wird, hat diese zweite Komponente nicht notwendigerweise Zugriff auf den Parameter (λ-1). Dennoch kann diese zweite Komponente eine Änderung der Zusammensetzung des Abgases leicht an einer Umkehr der Entwicklungstendenz des Zeitintegrals erkennen, d.h. wenn die Differenz zwischen zwei nacheinander berechneten Werten des Zeitintegrals ihr Vorzeichen wechselt.

Weitere Merkmale und Vorteile der Erfindung ergeben sich aus der nachfolgenden Beschreibung von Ausführungsbeispielen unter Bezugnahme auf die beigefügten Figuren. Es zeigen:

Fig. 1 ein Flussdiagramm eines Verfahrens zum Abschätzen des Beitrags von Speichereffekten zur Temperatur eines Abgaskatalysators;

Fig. 2 ein Flussdiagramm zum Abschätzen der Temperatur eines Abgaskatalysators aufbauend auf dem Verfahren der Fig. 1 und zum Steuern des Betriebs des Abgaskatalysators anhand der abgeschätzten Temperatur; und

Fig. 3 ein Flussdiagramm eines weiteren Verfahrens zum Betreiben eines Abgaskatalysators, das auf einer Abwandlung des in Fig. 1 dargestellten Verfahrens aufbaut.

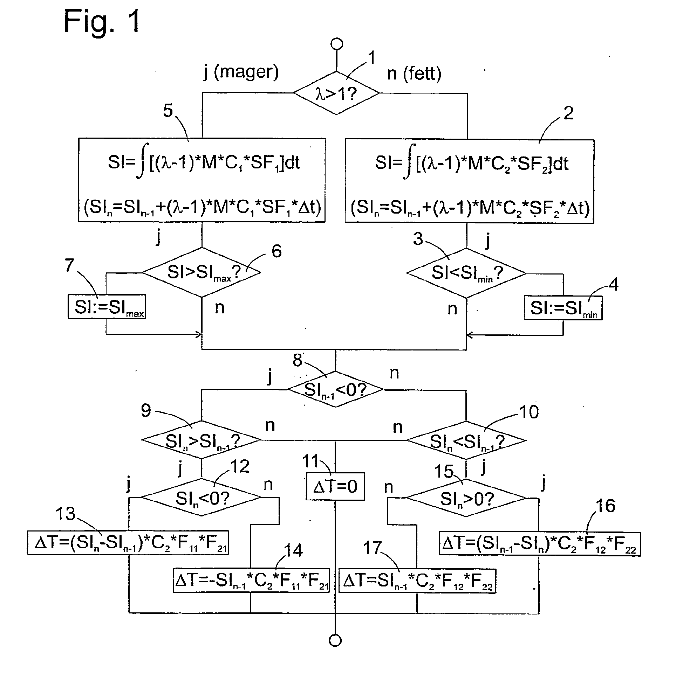

Das in Fig. 1 dargestellte Verfahren dient dazu, einen Temperatur-Korrekturwert $\Delta T$ zu berechnen, um den eine in herkömmlicher Weise ohne Berücksichtigung von Speichereffekten berechnete Temperatur des Katalysators korrigiert werden muss, um plötzlichen Erwärmungen Rechnung zu tragen, die darauf zurückgehen, dass bei einem Wechsel der Zusammensetzung des dem Verbrennungsmotor zugeführten Gemischs von fett zu mager oder umgekehrt zuvor im Katalysator gespeicherter Reaktand schlagartig umgesetzt wird.

Zunächst wird in Schritt 1 festgestellt, ob das dem Verbrennungsmotor aktuell zugeführte Gemisch fett ($\lambda \leq 1$) oder mager ($\lambda > 1$) ist, d.h. welcher Art der sich im Katalysator ansammelnde Reaktand ist.

Bei fettem Gemisch werden dem Katalysator Kohlenwasserstoff-Äquivalent, d. h. unverbrannte Kohlenwasserstoffe und/oder Kohlenmonoxid zugeführt, doch zu deren Nachverbrennung im Katalysator erforderlicher Sauerstoff ist im Abgas nicht mehr in ausreichendem Maße enthalten, so dass sich das Kohlenwasserstoff-Äquivalent im Katalysator ansammelt.

Ein Maß für die angesammelte Menge an Kohlenwasserstoff-Äquivalent ist das Speicherintegral SI, das in Schritt 2 berechnet wird. Allgemein ist das Speicherintegral SI ein Zeitintegral der Form

$$SI = \int (\lambda - 1) M\, C_2\, SF_2\, dt \;,$$

wobei M den Gasdurchsatz des Katalysators angibt, $C_2$ ein für die Kohlenwasserstoff-Äquivalente spezifischer Parameter ist, der ein Maß für deren Neigung, im Katalysator hängen zu bleiben, ist, und $SF_2$ ein Speicherfaktor ist, der von der bereits gespeicherten Kohlenwasserstoff- bzw. Kohlenmonoxidmenge und infolge dessen von λ, vom Gasdurchsatz M und der Zeitdauer, während derer der Motor ununterbrochen mit fettem Gemisch versorgt worden ist, abhängt. (Genau genommen hat der Parameter $C_2$ für jeden Bestandteil des Kohlenwasserstoff-Äquivalents einen eigenen Wert, doch genügt es für die Zwecke der Erfindung, mit einem entsprechend dem Anteil der diversen Bestandteile am Gesamt-Kohlenwasserstoff-Äquivalent des Abgasstroms gewichteten Mittelwert zu arbeiten.) Das Speicherintegral SI wird insbesondere numerisch berechnet, indem sein Wert $SI_n$ zu einem Zeitpunkt $t_n$ ausgehend von seinem Wert $SI_{n-1}$ zu einem vorhergehenden Zeitpunkt $t_{n-1}$ durch Hinzuaddieren von $(\lambda-1)\, M\, C_2\, SF_2\, \Delta t$ erhalten wird, wobei $\Delta t = t_n - t_{n-1}$ ist.

Die für den Katalysator spezifischen Parameter $C_2$ und $SF_2$ werden hier als positiv angenommen. Da M nur positive Werte annehmen kann und (λ-1) bei fettem Gemisch immer negativ ist, nimmt das Speicherintegral SI immer negative Werte an, wenn Kohlenwasserstoffe und Kohlenmonoxid im Katalysator gespeichert sind.

Der Tatsache, dass das Speichervermögen des Katalysators für die Kohlenwasserstoffe begrenzt ist, kann Rechnung getragen werden, indem in einem Schritt 3 geprüft wird, ob das (wohlgemerkt negative) Speicherintegral SI einen dem maximalen Speichervermögen entsprechenden Wert $SI_{min}$ unterschritten hat und, wenn ja, in einem Schritt 4 der Wert von SI auf $SI_{min}$ begrenzt wird.

Wenn in Schritt 1 festgestellt wird, dass das Gemisch mager ist, d. h. dass im Abgas ein Sauerstoffüberschuss herrscht, so wird in Schritten 5, 6, 7 in analoger Weise, wie oben für die Schritte 2 bis 4 erläutert, ein Wert des Speicherintegrals SI ermittelt, der ein Maß für die im Katalysator gespeicherte Sauerstoffmenge darstellt. Der stoffspezifische Parameter $C_1$ und der Speicherfaktor $SF_1$ haben hier im allgemeinen einen anderen Zahlenwert als die entsprechenden, auf Kohlenwasserstoffe bezogenen Parameter $C_2$, $SF_2$. Auch für $C_1$, und $SF_1$ wird angenommen, dass sie niemals negativ sind. Ein positiver Wert von SI kann daher nur unter der Voraussetzung (λ-1) > 0 erhalten werden, und ein negativer nur, wenn (λ-1) > 0 gilt. Daher kann die gleiche Variable SI Maß sowohl für die gespeicherte Kohlenwasserstoff- und Kohlenmonoxidmenge als auch für die gespeicherte Sauerstoffmenge dienen, wobei ein positiver Wert ein Maß für die gespeicherte Sauerstoffmenge und ein negativer Wert ein Maß für die gespeicherte Menge an Kohlenwasserstoff-Äquivalent darstellt. Wie im Fall der Schritte 3, 4 kann eine Begrenzung des Speicherintegrals SI nach oben, die einer maximal speicherbaren Sauerstoffmenge entspricht, auf einen Wert $SI_{max}$ realisiert werden, indem SI mit $SI_{max}$ verglichen (Schritt 6) und ggf. auf $SI_{max}$ reduziert wird (Schritt 7).

Die Parameter $C_1$, $SF_1$, C2 und $SF_2$ können jeweils als Konstante, im Rahmen einer weiterentwickelten Ausgestaltung aber auch als von Temperatur und/oder Gasdurchfluss des Katalysators abhängige Größen angesetzt werden, wobei die Abhängigkeit von Temperatur und/oder Gasdurchfluss jeweils an einem Prototypen des Katalysators empirisch ermittelt sein kann.

Insbesondere bei Fahrzeugen, die über eine Katalysatordiagnose in Form einer regelmäßigen Ermittlung der Sauerstoffspeicherfähigkeit oder Kohlenmonoxid-/Kohlenwasserstoffspeicherfähigkeit des Katalysators verfügen, ist es zweckmäßig, für $SI_{min}$ und $SI_{max}$ von den so ermittelten Werten abgeleitete Werte zu verwenden.

Nachdem das Speicherintegral SI berechnet worden ist, verzeigt das Verfahren in Schritt 8 bei negativem Vorzeichen des Speicherintegrals $S_{n-1}$ zu Schritt 9 und bei positivem Vorzeichen zu Schritt 10. In Schritt 9 wird geprüft, ob der aktuelle Wert des Speicherintegrals $SI_n$ größer als der vorhergehende $SI_{n-1}$ ist. Wenn nein, d.h. wenn das Speicherintegral eine fallende oder gleichbleibende Tendenz hat, kann keine Nachverbrennung des gespeicherten Kohlenwasserstoffs stattfinden, und eine aus der Nachverbrennung resultierende Temperaturkorrektur $\Delta T$ wird in Schritt 11 gleich 0 gesetzt.

Wenn in Schritt 9 festgestellt wird, dass $SI_n > SI_{n-1}$ ist, der Betrag des Speicherintegrals also abnimmt, so muss eine Änderung der Gemischzusammensetzung von fett zu mager stattgefunden haben, und die Verbrennung des im Katalysator gespeicherten Kohlenwasserstoffs und Kohlenmonoxids setzt ein. Je nach Wert des Gasdurchsatzes M können ein oder mehrere Zyklen $\Delta t$ erforderlich sein, um den Kohlenwasserstoffvorrat umzusetzen. Wenn der Vorrat in einem Zyklus nicht vollständig umgesetzt wird, errechnet das Verfahren in Schritt 13 einen Temperatursprung

$$\Delta T = (SI_n - SI_{n-1})\ C_2\ F_{11}\ F_{21}$$

(wobei $F_{11}$, $F_{21}$ auf Kohlenwasserstoff-Äquivalent bezogene Parameter sind, die eine im Modell berücksichtigte Temperaturabhängigkeit aufweisen können, und von denen der eine $F_{11}$ vom Gasdurchsatz abhängig ist und der andere $F_{21}$ sich durch die Alterung des Katalysators ändert).

Wenn das Speicherintegral sein Vorzeichen wechselt, d.h. wenn in Schritt 12 $SI_n > 0$ ist, so wird zur Berechnung des Temperatursprungs $SI_n = 0$ angenommen, d.h. der Temperatursprung $\Delta T$ wird in Schritt 14 nach folgender Formel berechnet

$$\Delta T = -SI_{n-1}\ C_2\ F_{11}\ F_{21}.$$

In analoger Weise zu Schritt 9 wird in Schritt 10 die Entwicklungstendenz des Speicherintegrals beurteilt. Wenn $SI_n > SI_{n-1}$ ist, d.h. wenn SI positiv bei steigender Tendenz ist, so steigt die Menge an im Katalysator gespeichertem Sauerstoff, eine Umsetzung des Sauerstoffs findet nicht statt, und die Temperaturkorrektur wird folglich in Schritt 11 auf $\Delta T = 0$ gesetzt. Wenn allerdings in Schritt 10 eine fallende Tendenz festgestellt wird, so ist dies gleichbedeutend mit einem Wechsel von magerem zu fettem Gemisch, und eine Reaktion mit dem gespeicherten Sauerstoff kann stattfinden. Die Temperaturkorrektur wird in den Schritten 15, 16, 17 in analoger Weise wie in den Schritten 12 bis 13 anhand von analogen Formeln berechnet:

$$\Delta T = (SI_{n-1} - SI_n)\ C_2\ F_{12}\ F_{22},$$

wenn kein Vorzeichenwechsel von SI auftritt, und

$$\Delta T = SI_{n-1}\ C_2\ F_{12}\ F_{22}$$

bei einem Vorzeichenwechsel.

Dabei sind $F_{12}$ und $F_{22}$ auf Sauerstoff bezogene Parameter, von denen der eine $F_{12}$ vom Gasdurchsatz und der andere $F_{22}$ von der aktuellen Alterung des Katalysators abhängig ist, und die wie $F_{11}$ und $F_{21}$ eine zu berücksichtigende Temperaturabhängigkeit aufweisen können).

Auf diese Weise wird ein Maß für die Temperaturabweichung $\Delta T$ zwischen der wahren Temperatur des Katalysators und einer Katalysatortemperatur ermittelt, die in herkömmlicher Weise ohne Berücksichtigung von Speichereffekten berechnet wird.

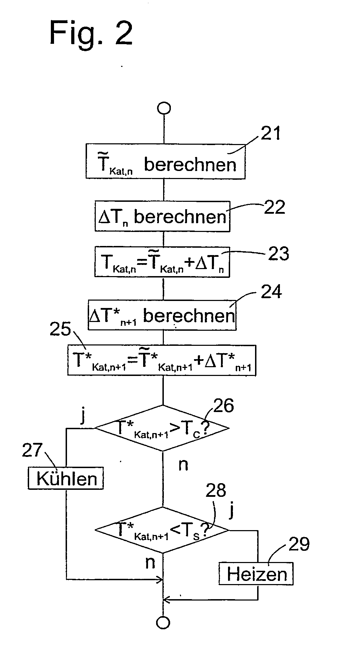

Fig. 2 zeigt ein Flussdiagramm eines von einem elektronischen Motorsteuergerät ausgeführten Betriebsverfahrens für einen Katalysator, das auf dem Verfahren aus Fig. 1 aufbaut. Das Verfahren wird iterativ ausgeführt. Zum Zeitpunkt $t_n$ der gegenwärtigen Iteration ist die Temperatur des Katalysators $T_{Kat,n-1}$ am vorhergehenden Iterationszeitpunkt $t_{n-1}$ aus der vorhergehenden Iteration bekannt.

Die aktuelle Iteration zum Zeitpunkt $t_n$ beginnt damit, dass in Schritt 21 ein Schätzwert der Katalysatortemperatur $\tilde{T}_{Kat,n}$ zum gegenwärtigen Iterationszeitpunkt $t_n$ nach einem herkömmlichen Verfahren wie etwa dem aus US 5 414 994 bekannten, anhand der Temperatur $T_{Kat,n-1}$ am vorhergehenden Iterationszeitpunkt $t_{n-1}$, ak-

tueller Werte des Luftverhältnisses $\lambda$ und des Abgasdurchsatzes M unter Berücksichtigung der mit dem Abgas zu- und abgeführten Wärmemengen, der durch katalytische Reaktionen des fortlaufend zugeführten Abgases frei werdenden Wärmemenge, aber ohne Berücksichtigung von eventuell bei der Umsetzung von gespeicherten Reaktanden frei werdender Wärme, berechnet wird.

In Schritt 22 wird eine aktuelle Temperaturkorrektur $\Delta T_n$ nach dem anhand von Fig. 1 beschriebenen Verfahren ebenfalls anhand des aktuellen Luftverhältnisses $\lambda$ und Abgasdurchsatzes M ermittelt und in Schritt 23 die momentane Katalysatortemperatur $T_{Kat,n}$ nach der Formel

$$T_{Kat,n} = \widetilde{T}_{Kat,n} + \Delta T_n$$

berechnet.

Im Schritt 24 legt das Motorsteuergerät anhand eines aktuellen Bewegungszustandes des mit dem Motor ausgestatteten Kraftfahrzeugs und der einen Wunsch des Fahrers angebenden Stellung des Fahrpedals in einer nächsten Iteration des Verfahrens einzustellende Werte des Luftverhältnisses $\lambda$ und des Gasdurchsatzes M fest und berechnet für diese Werte einen Schätzwert

$\widetilde{T}^{*}_{Kat,n+1}$ der Katalysatortemperatur zum Zeitpunkt $t_{n+1}$ der nächsten Iteration in zum Schritt 21 analoger Weise, eine zu erwartende Temperaturkorrektur $\Delta T^{*}_{n+1}$ nach dem anhand von Fig. 1 beschriebenen Verfahren und addiert beide in Schritt 25 zu einer prognostizierten Katalysatortemperatur $T^{*}_{Kat,n+1}$:

$$T^{*}_{Kat,n+1} = \widetilde{T}^{*}_{Kat,n+1} + \Delta T^{*}_{n+1}.$$

In Schritt 26 wird geprüft, ob diese Temperatur $T^{*}_{Kat,n+1}$ eine kritische Betriebstemperatur des Katalysators, z.B. 950˚ C überschreitet. Wenn ja, werden Schutzmaßnahmen 27, 28, 29 durchgeführt, um den Katalysator zu kühlen bzw. seine Überhitzung zu vermeiden. Grundsätzlich sind beliebige zum Drosseln der Katalysatortemperatur aus dem Stand der Technik bekannte Maßnahmen geeignet. Insbesondere kann, wenn in Schritt 27 festgestellt wird, dass der Motor bereits zuvor mit fettem Gemisch ($\lambda < 1$) betrieben wurde, eine zusätzliche Anfettung beschlossen werden (Schritt 28), um so das dem Katalysator zugeführte Abgas zu kühlen. Wenn umgekehrt in Schritt 27 festgestellt wird, dass bislang mageres Gemisch zugeführt wurde, so darf, wenn sich die Katalysatortemperatur der Grenztemperatur nähert, zum Kühlen keinesfalls angefettet werden; stattdessen wird in Schritt 29 eine Herabsetzung des Gasdurchsatzes (und damit der Leistung des Motors) ggf. entgegen dem durch die Fahrpedalstellung ausgedrückten Fahrerwunsch beschlossen.

Wenn in Schritt 26 festgestellt wird, dass die kritische Temperatur $T_C$ nicht überschritten wird, so folgt in Schritt 30 eine Überprüfung, ob eine Mindestbetriebstemperatur $T_S$ des Katalysators unterschritten wird. Wenn ja, insbesondere in einer Warmlaufphase kurz nach dem Anlassen des Motors, werden in Schritt 31 geeignete, an sich bekannte Maßnahmen zur Steigerung der Katalysatortemperatur beschlossen; wenn nicht, geht das Verfahren direkt zu Schritt 32 über.

In Schritt 32 wird das Vorzeichen des bereits zuvor im Laufe der Berechnung der aktuellen Temperaturkorrektur $\Delta T_n$ in Schritt 22 ermittelte Speicherintegral SI überprüft. Je nach Vorzeichen des Speicherintegrals, d.h. je nach Art des im Katalysator gespeicherten Reaktanden, wird eine aus der schlagartigen Umsetzung dieses Reaktanden in der durch das Speicherintegral SI angegebenen Menge resultierende Erwärmung $\Delta T'_{n+1}$ des Katalysators in Schritt 33 oder 34 berechnet. Dabei bezeichnet $F'_{11}$ bzw. $F'_{12}$ jeweils den Wert der oben mit Bezug auf Fig. 1 erläuterten Konstanten $F_{11}$, $F_{12}$, der einem maximalen Wert des Luftdurchsatzes M des Verbrennungsmotors entspricht. D.h., $\Delta T'$ ist der Temperatursprung, der sich bei der schnellstmöglichen Umsetzung des zur Zeit $t_n$ gespeicherten Reaktanden ergeben würde, und damit der für den jeweils aktuellen Wert des Speicherintegrals SI größtmögliche Temperatursprung. Alternativ kann die Berechnung auch mit $F_{11}$, $F_{12}$ und dem tatsächlich in der nächsten Iteration einzustellenden Gasdurchsatz M durchgeführt werden.

In Schritt 35 wird die Temperatur

$$T'_{Kat,n+1} = T_{Kat,n} + \Delta T'_{n+1}$$

berechnet, die der Katalysator maximal erreichen könnte, wenn der gespeicherte Reaktand in der vom Speicherintegral SI angegebenen momentanen Menge mit der größtmöglichen Geschwindigkeit umgesetzt würde. In Schritt 36 wird geprüft, ob diese Temperatur $T'_{Kat,n}$ über der kritischen Temperatur $T_C$ liegt. Wenn ja, wird in Schritt 37 eine eventuelle Umschaltung von fettem zu magerem Gemisch oder umgekehrt gesperrt, um die Umsetzung des gespeicherten Reaktanden zu unterbinden.

Anstelle von $T_{kat,n}$ kann in Schritt 35 auch $T^{*}_{kat,n+1}$ eingesetzt werden.

In Schritt 38 wird schließlich das Gemisch mit der in den Schritten 28, 29, 31 oder 37 beschlossenen Dosierung zugeführt.

Das anhand von Fig. 2 für den Zeitpunkt $t_n$ beschriebene Verfahren kann an Folgezeitpunkten $t_{n+1}$, $t_{n+2}$ etc. jeweils identisch iteriert werden. Alternativ können, falls bei der n-ten Iteration keiner der Schritte 28, 29, 31 oder 37 durchgeführt wurde, bei der n+1-ten Iteration die Schritte 21, 22, 23, in denen die aktuelle Katalysatortemperatur berechnet wird, übersprungen werden, da die in Schritt 25 der n-ten Iteration erhaltene prognostizierte Katalysatortemperatur $T^*_{Kat,n+1}$ praktisch mit der Katalysatortemperatur $T_{Kat,n+1}$ identisch ist, die sich in Schritt 23 der n+1-ten Iteration ergäbe, wenn diese durchgeführt würde. Lediglich wenn Korrekturmaßnahmen der Schritte 28, 29, 31 oder 37 dazu führen, dass die in der n-ten Iteration für die Prognose verwendeten Werte des Luftverhältnisses λ und des Gasdurchsatzes M deutlich andere sind als die, die später tatsächlich am Motor eingestellt wurden, ist in der n+1-ten Iteration eine Neuberechnung von $T_{Kat,n+1}$ auf der Grundlage dieser veränderten Werte erforderlich.

Zusammenfassend kann man sagen, dass, während herkömmliche Verfahren zur Regelung der Katalysatortemperatur einen Sicherheitsabstand zwischen der berechneten Katalysatortemperatur und der kritischen Temperatur $T_C$ einhalten, damit auch bei einer aus einem Wechsel des Gemischstatus von fett zu mager oder umgekehrt resultierenden kurzzeitigen Erhitzung des Katalysators die kritische Temperatur $T_C$ nicht überschritten wird, das Verfahren nach Fig. 2 die Betriebsbedingungen des Katalysators unter Berücksichtigung einer möglichen kurzzeitigen Erhitzung durch Umsetzung von gespeicherten Reaktanden vorbeugend daraufhin überprüft, ob die kritische Temperatur eingehalten werden kann, und, wenn sich dies bei geplanten Betriebsbedingungen zunächst als nicht möglich erweist, die Betriebsbedingungen dahingehend korrigiert, dass die kritische Temperatur $T_C$ nicht überschritten wird. Auf die Einhaltung eines festen Sicherheitsabstandes zur kritischen Temperatur $T_C$ kann somit verzichtet werden. Eine Gemischanfettung zum Schutze des Katalysators, die den Kraftstoffverbrauch steigert, findet nur dann statt, wenn sie tatsächlich unumgänglich ist, um die Überschreitung der kritischen Temperatur $T_C$ zu vermeiden, so dass sich die Verbrauchs- und Abgaswerte eines erfindungsgemäß gesteuerten Verbrennungsmotors verbessern.

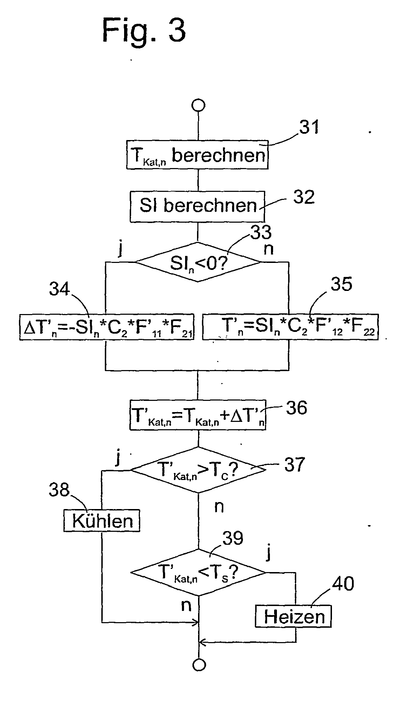

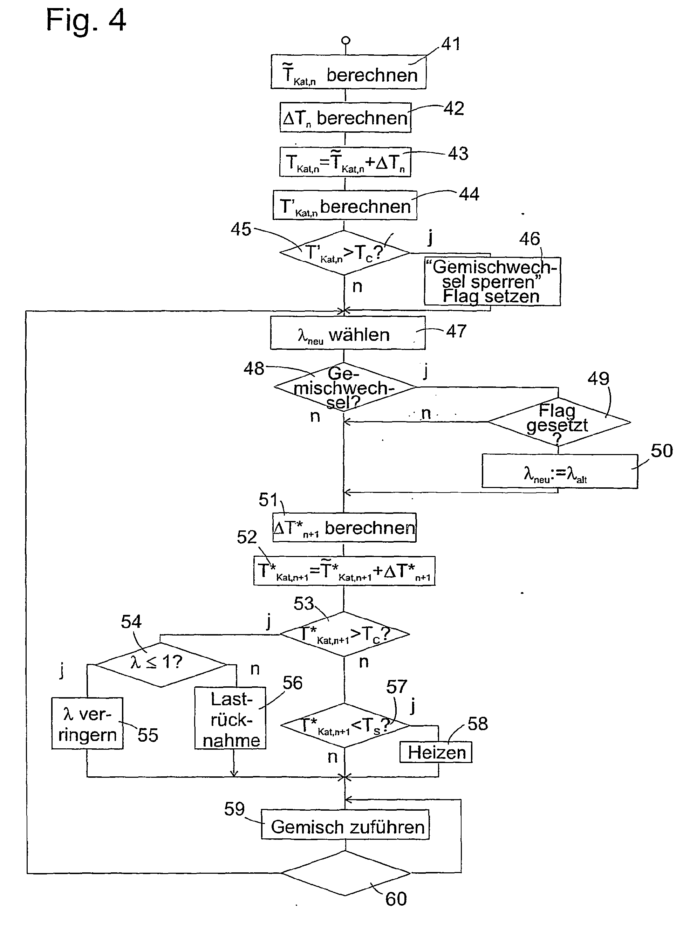

Eine zweite Ausgestaltung eines Betriebsverfahrens für einen Katalysator gemäß der Erfindung wird anhand der Fig. 3 erläutert. Der Schritt 41 ist mit den Schritten 21 bis 23 der Fig. 2 identisch. In Schritt 42 wird das oben erläuterte Speicherintegral SI berechnet. Hierfür werden, soweit erforderlich, die Schritte 1 bis 7 aus Fig. 1 ausgeführt. Die Schritte 43 bis 47 entsprechen den oben mit Bezug auf Fig. 2 beschriebenen Schritten 32 bis 36. Wenn in Schritt 47 festgestellt wird, dass die bei vollständiger Umsetzung des gespeicherten Reaktanden erreichbare Temperatur $T'_{Kat,n}$ über der kritischen Temperatur $T_C$ liegt, wird in Schritt 48 wie in Schritt 27 der Fig. 2 geprüft, ob die Verbrennung bisher fett oder mager war. Bei bisher fetter Verbrennung (λ<1) wird λ weiter reduziert, um den Katalysator zu kühlen (Schritt 48), bei bisher magerer Verbrennung wird die Last reduziert (Schritt 49).

Bei dem Verfahren der Fig. 3 wird somit der herkömmliche Sicherheitsabstand zwischen einer berechneten Katalysatortemperatur $T_{Kat}$ und der kritischen Temperatur $T_C$ nicht wie im Verfahren der Fig. 2 vollends aufgegeben, sondern es wird ein variabler Sicherheitsabstand ∆T' eingehalten, der der Temperatursteigerung entspricht, die der Katalysator erführe, wenn zu einem gegebenen Zeitpunkt die zu diesem Zeitpunkt im Katalysator gespeicherte Menge eines Reaktanden mit der durch Bauart des Katalysators und des vorgeschalteten Verbrennungsmotors festgelegten höchstmöglichen Geschwindigkeit umgesetzt würde. Dieser Sicherheitsabstand kann Null werden, wenn das Speicherintegral 0 ist.

## Patentansprüche

1. Verfahren zum Betreiben eines Verbrennungsmotors mit nachgeschaltetem Abgaskatalysator, bei dem die Temperatur ($\tilde{T}_{Kat}$) des Katalysators anhand des Abgasdurchsatzes (M) des Katalysators und eines die Zusammensetzung des Abgases charakterisierenden Parameters (λ) berechnet wird (21), wobei eine in dem Katalysator gespeicherte Menge (SI) eines Reaktanden verfolgt (22; 2 - 7) und im Falle einer Änderung der Zusammensetzung des Abgases, die eine Umsetzung des gespeicherten Reaktanden ermöglicht, die bei der Umsetzung des gespeicherten Reaktanden frei werdende Reaktionswärme bei der Berechnung der Temperatur ($T_{Kat}$) berücksichtigt (23) wird, **dadurch gekennzeichnet, dass** das dem Verbrennungsmotor zugeführte Gemisch so geregelt wird, dass die berechnete Temperatur ($T_{Kat}$) des Katalysators unter einer vorgegebenen Grenztemperatur ($T_C$) bleibt

2. Verfahren nach Anspruch 1, **dadurch gekennzeichnet, dass** mit dem Verfahren eine zukünftige Katalysatortemperatur unter der Annahme berechnet wird (24, 25), dass das Gemisch entsprechend einem gegenwärtigen Fahrerwunsch geregelt wird, und dass, wenn diese Berechnung eine Temperatur oberhalb der Grenztemperatur ($T_C$) ergibt (26), das Gemisch vom Fahrerwunsch abweichend geregelt wird (28, 29).

3. Verfahren nach Anspruch 2, **dadurch gekennzeichnet, dass** wenn das gegenwärtig zugeführte Gemisch fett ist und der gegenwärtige Fahrerwunsch einem mageren Gemisch entspricht, so dass die Berechnung eine Temperatur oberhalb der Grenztemperatur ($T_C$) ergibt (36), das Gemisch abweichend vom Fahrerwunsch fett geregelt wird (37).

4. Verfahren nach Anspruch 2 oder 3, **dadurch gekennzeichnet, dass** wenn das gegenwärtig zugeführte Gemisch mager ist (27) und die Berechnung eine Temperatur oberhalb der Grenztemperatur ($T_C$) ergibt (26), das Gemisch auf einen kleineren Durchsatz geregelt wird, als dem gegenwärtigen Fahrerwunsch entspricht (29).

**5.** Verfahren nach einem der Ansprüche 1 bis 4, **dadurch gekennzeichnet, dass** eine hypothetische Katalysatortemperatur ($T'_{Kat,n}$) berechnet wird (33, 34), die sich ergäbe, wenn der im Katalysator gespeicherte Reaktand vollständig umgesetzt würde, und dass ein Gemischwechsel gesperrt wird (37), wenn festgestellt wird (36), dass die hypothetische Temperatur oberhalb der Grenztemperatur ($T_C$) liegt.

**6.** Verfahren nach Anspruch 1, **dadurch gekennzeichnet, dass** das dem Verbrennungsmotor zugeführte Gemisch so geregelt wird (48), dass die berechnete Temperatur des Katalysators einen Sicherheitsabstand ($\Delta T'$) zu einer vorgegebenen Grenztemperatur ($T_C$) einhält (44, 45), wobei der Sicherheitsabstand ($\Delta T'$) einem möglichen Temperatursprung ($\Delta T'$) entspricht, der abgeschätzt wird, indem eine in dem Katalysator gespeicherte Menge eines Reaktanden (SI) verfolgt wird (2 - 7) und als der mögliche Temperatursprung ($\Delta T, \Delta T', \Delta T^*$) die Erwärmung ($\Delta T, \Delta T', \Delta T^*$) des Katalysators angenommen wird (13, 14, 16, 17; 33, 34), die aus der bei der Umsetzung des gespeicherten Reaktanden frei werdenden Reaktionswärme resultiert.

**7.** Verfahren nach einem der vorangegangenen Ansprüche, **dadurch gekennzeichnet, dass** bei der Berechnung (33, 34) der Erwärmung ($\Delta T'$) eine vollständige Umsetzung des gespeicherten Reaktanden angenommen wird.

**8.** Verfahren nach einem der Ansprüche 1 bis 6, **dadurch gekennzeichnet, dass** bei der Berechnung (13, 14, 16, 17) der Erwärmung ($\Delta T$) die Umsetzung einer zum momentanen Gasdurchsatz (M) proportionalen Menge ($SI_n - SI_{n-1}; SI_n$) des gespeicherten Reaktanden innerhalb einer vorgegebenen Zeitspanne ($\Delta t$) angenommen wird.

**9.** Verfahren nach Anspruch 8, **dadurch gekennzeichnet, dass** die als umgesetzt angenommene Menge des Reaktanden begrenzt wird (14, 17) durch die zu Beginn der Zeitspanne ($\Delta t$) gespeicherte Menge ($SI_n$) des Reaktanden.

**10.** Verfahren nach einem der Ansprüche 7 bis 9, **dadurch gekennzeichnet, dass** in die Berechnung (13, 14, 16, 17, 33, 34) der Erwärmung ein von der Alterung des Katalysators abhängiger Ausdruck ($F_{21}, F_{22}$) eingeht.

**11.** Verfahren nach einem der vorhergehenden Ansprüche, **dadurch gekennzeichnet, dass** ein Reaktand, dessen gespeicherte Menge verfolgt wird (5, 6, 7), Sauerstoff ist, und dass die Änderung der Zusammensetzung des Abgases der Übergang von magerem zu fettem Gemisch ist.

**12.** Verfahren nach einem der Ansprüche 1 bis 10, **dadurch gekennzeichnet, dass** ein Reaktand, dessen gespeicherte Menge verfolgt wird (2, 3, 4), Kohlenwasserstoff und/oder Kohlenmonoxid ist, und dass die Änderung der Zusammensetzung des Abgases der Übergang von fettem zu magerem Gemisch ist.

**13.** Verfahren nach einem der vorhergehenden Ansprüche, **dadurch gekennzeichnet, dass** die gespeicherte Menge (SI) verfolgt wird (2 - 7) durch Bilden des Zeitintegrals eines Ausdrucks, der proportional zu ($\lambda$-1), wobei $\lambda$ das Luftverhältnis der Verbrennung ist, und zum Gasdurchsatz (M) des Katalysators ist.

**14.** Verfahren nach Anspruch 13, **dadurch gekennzeichnet, dass** der Ausdruck ferner proportional zu einem von der Betriebsgeschichte des Katalysators abhängigen Speicherfaktor ($SF_1, SF_2$) ist.

**15.** Verfahren nach Anspruch 13 oder 14, **dadurch gekennzeichnet, dass** eine Änderung der Zusammensetzung des Abgases, die eine Umsetzung des gespeicherten Reaktanden ermöglicht, an einer Umkehr der Entwicklungstendenz des Zeitintegrals (SI) erkannt (9, 10) wird.

**16.** Motorsteuergerät für einen Verbrennungsmotor, **dadurch gekennzeichnet, dass** es eingerichtet ist, ein Verfahren nach einem der vorhergehenden Ansprüche auszuführen.

**Claims**

**1.** Method for operating an internal combustion engine with a downstream exhaust gas catalytic converter, in which the temperature ($\tilde{T}_{cat}$) of the catalytic converter is calculated (21) with the aid of the exhaust gas throughput (M) of the catalytic converter and a parameter ($\lambda$) characterising the composition of the exhaust gas, wherein a quantity (SI) of a reactand stored in the catalytic converter is tracked (22; 2-7) and in the event of a change in the composition of the exhaust gas, which allows a conversion of the stored reactand, the reaction heat being released during the conversion of the stored reactand is taken into account (23) in the calculation of the temperature ($T_{cat}$), **characterised in that** the mixture supplied to the internal combustion engine is regulated in such a way that the calculated temperature ($T_{cat}$) of the catalytic converter remains below a predetermined limit temperature ($T_c$).

**2.** Method according to claim 1, **characterised in that** a future catalytic converter temperature is calculated (24, 25) by the method under the assumption that the mixture is regulated according to a present driver's wish, and **in that** when this calculation produces (26) a temperature above the limit temperature ($T_c$), the mixture is regulated (28, 29) deviating from the driver's wish.

3. Method according to claim 2, **characterised in that** when the presently supplied mixture is rich and the present driver's wish corresponds to a lean mixture, so that the calculation produces (36) a temperature above the limit temperature ($T_c$), the mixture is regulated (37) so as to be rich, deviating from the driver's wish.

4. Method according to claim 2 or 3, **characterised in that** when the presently supplied mixture is lean (27) and the calculation produces (26) a temperature above the limit temperature ($T_c$), the mixture is regulated to a smaller throughput than corresponds (29) to the present driver's wish.

5. Method according to any one of claims 1 to 4, **characterised in that** a hypothetical catalytic converter temperature ($T'_{cat, n}$) is calculated (33, 34) which would be produced if the reactand stored in the catalytic converter were to be completely converted, and **in that** a mixture change is blocked (37) when it is ascertained (36), that the hypothetical temperature is above the limit temperature ($T_c$).

6. Method according to claim 1, **characterised in that** the mixture supplied to the internal combustion engine is regulated (48) in such a way that the calculated temperature of the catalytic converter maintains (44, 45) a safety margin ($\Delta T'$) from a predetermined limit temperature ($T_c$), wherein the safety margin ($\Delta T'$) corresponds to a possible temperature jump ($\Delta T'$), which is estimated **in that** a quantity of a reactand (SI) stored in the catalytic converter is tracked (2 to 7) and the heating ($\Delta T, \Delta T', \Delta T^*$) of the catalytic converter is assumed (13, 14, 16, 17; 33, 34) to be the possible temperature jump ($\Delta T, \Delta T', \Delta T^*$), which heating results from the reaction heat being released during the conversion of the stored reactand.

7. Method according to any one of the preceding claims, **characterised in that** in the calculation (33, 34) of the heating ($\Delta T'$), a complete conversion of the stored reactand is assumed.

8. Method according to any one of claims 1 to 6, **characterised in that** in the calculation (13, 14, 16, 17) of the heating ($\Delta T$), the conversion of a quantity ($SI_n - SI_{n-1}$; $SI_n$) of the stored reactand proportional to the instantaneous gas throughput (M) within a predetermined timespan ($\Delta t$) is assumed.

9. Method according to claim 8, **characterised in that** the quantity of the reactand assumed to have been converted is limited (14, 17) by the quantity ($SI_n$) of the reactand stored at the beginning of the timespan ($\Delta t$).

10. Method according to any one of claims 7 to 9, **characterised in that** an expression ($F_{21}, F_{22}$) which depends on the aging of the catalytic converter is entered in the calculation (13, 14, 16, 17, 33, 34) of the heating.

11. Method according to any one of the preceding claims, **characterised in that** a reactand, the stored quantity of which is tracked (5, 6, 7) is oxygen and **in that** the change in the composition of the exhaust gas is the transition from a lean to a rich mixture.

12. Method according to any one of claims 1 to 10, **characterised in that** a reactand, the stored quantity of which is tracked (2, 3, 4) is hydrocarbon and/or carbon monoxide, and **in that** the change in the composition of the exhaust gas, is the transition from a rich to a lean mixture.

13. Method according to any one of the preceding claims, **characterised in that** the stored quantity (SI) is tracked (2 to 7) by forming the time integral of an expression, which is proportional to ($\lambda-1$), $\lambda$ being the air ratio of the combustion, and to the gas throughput (M) of the catalytic converter.

14. Method according to claim 13, **characterised in that** the expression is also proportional to a storage factor ($SF_1, SF_2$) which depends on the operating history of the catalytic converter.

15. Method according to claim 13 or 14, **characterised in that** a change in the composition of the exhaust gas, which allows a conversion of the stored reactand, is recognised (9, 10) by a reversal of the trend of the time integral (SI).

16. Engine control apparatus for an internal combustion engine, **characterised in that** it is set up to carry out a method according to any one of the preceding claims.

**Revendications**

1. Procédé pour faire fonctionner un moteur à combustion avec pot catalytique pour gaz d'échappement monté en aval, dans le cassur dulequel la température ($\tilde{T}T_{kat}$) du pot catalytique est calculée à l'aide du débit de gaz d'échappement (M) du pot catalytique et d'un paramètre ($\lambda$) qui caractérise la composition du des gaz d'échappement (21), une quantité (SI) d'un réactif stocké dans le pot catalytique étant suivie (22 ; 2 - 7) et, la chaleur de réaction dégagée lors de la transformation du réactif stocké étant prise en compte lors du calcul de la température ($T_{kat}$) (23) en cas de modification de la composition du des gaz d'échappement qui permet une transformation du réactif stocké, **caractérisé en ce que** le mélange amené au moteur de à combustion est réglé de telle manière que la température calculée ($T_{kat}$) du pot catalytique reste en dessous d'une température limite prescrite ($T_c$).

2. Procédé selon la revendication 1, **caractérisé en ce qu'**avec le procédé, une température de catalyseur future est calculée (24, 25) en supposant que le mélange est réglé conformément à un souhait actuel du conducteur et **en ce que**, si ce calcul donne une température supérieure à la température limite ($T_c$) (26), le mélange estsera réglé de manière divergente par rapport au souhait du conducteur (28, 29).

3. Procédé selon la revendication 2, **caractérisé en ce que** si le mélange actuellement amené est gras et si le souhait actuel dule conducteur correspond àsouhaite actuellement un mélange maigre, de telle sorte que le calcul donne une température supérieure à la température limite ($T_c$) (36), le mélange estréglé sera réglé gras, de manière divergeante par rapport audu souhait du conducteur (37).

4. Procédé selon la revendication 2 ou 3, **caractérisé en ce que** si le mélange actuellement amené est maigre (27) et si le calcul donne une température supérieure à la température limite ($T_c$) (26), le mélange sera est réglé à un débit inférieur à ce quei correspond au souhaite actuellement ledu conducteur (29).

5. Procédé selon une des revendications 1 à 4, **caractérisé en ce qu'**une température de pot catalytique hypothétique ($T'_{Kat, n}$), qui serait obtenue si le réactif stocké dans le pot catalytique était complètement transformé, est calculée et **en ce qu'**un changement de mélange est bloqué (37) s'il est constaté l'on constate (36) que la température hypothétique est supérieure à la température limite ($T_c$).

6. Procédé selon la revendication 1, **caractérisé en ce que** le mélange amené au moteur de combustion est réglé de telle manière (48) que la température calculée du pot catalytique respecte une écartdistance de sécurité ($\Delta T'$) par rapport à une température limite ($T_c$) prescrite (44, 45), l'écarta distance de sécurité ($\Delta T'$) correspondant à un saut de température possible ($\Delta T'$) qui est estimé en suivant une quantité d'un réactif (SI) stocké dans le pot catalytique (2 - 7), et en supposant que le réchauffement ($\Delta T, \Delta T', \Delta T^*$) du pot catalytique, qui résulte de la chaleur de réaction dégagée lors de la transformation du réactif stocké, est le saut de température possible ($\Delta T, \Delta T', \Delta T^*$) (13, 14, 16, 17 ; 33, 34).

7. Procédé selon une des revendications précédentes, **caractérisé en ce que** lors du calcul (33, 34) du réchauffement ($\Delta T'$) une transformation complète du réactif stocké est supposée.

8. Procédé selon une des revendications 1 à 6, **caractérisé en ce que** lors du calcul (13, 14, 16, 17) du réchauffement ($\Delta T$), la transformation d'une quantité ($SI_n - SI_{n-1}$ ; $SI_n$) de réactif stocké proportionnelle au débit de gaz (M) instantané momentané dans une plage de tempsdélai prescrite ($\Delta t$) est supposée.

9. Procédé selon la revendication 8, **caractérisé en ce que** la quantité de réactif supposée être transformée est limitée (14, 17) par la quantité de réactif stockée ($SI_n$) au début de la plage de temps ($\Delta t$).

10. Procédé selon une des revendications 7 à 9, **caractérisé en ce qu'**une expression ($F_{21}, F_{22}$) qui est fonction du vieillissement du pot catalytique est prise en compte dans le calcul (13, 14, 16, 17, 33, 34) du réchauffement.

11. Procédé selon une des revendications précédentes, **caractérisé en ce qu'**un réactif dont la quantité stockée est suivie (5, 6, 7) est de l'oxygène et **en ce que** la modification de la composition dues gaz d'échappement correspond au passage d'un mélange maigre à un mélange gras.

12. Procédé selon une des revendications 1 à 10, **caractérisé en ce qu'**un réactif dont la quantité stockée est suivie (2, 3, 4) est de l'hydrocarbure et/ou du monoxyde de carbone et **en ce que** la modification de la composition desu gaz d'échappement correspond au passage d'un mélange gras à un mélange maigre.

13. Procédé selon une des revendications précédentes, **caractérisé en ce que** la quantité stockée (SI) est suivie (2 - 7) par formation de l'intégrale depar rapport au temps d'une expression proportionnelle à ($\lambda - 1$), $\lambda$ étant la proportion d'air de la combustion, et au débit de gaz (M) du pot catalytique.

14. Procédé selon la revendication 13, **caractérisé en ce que** l'expression est en outre proportionnelle à un facteur de stockage ($SF_1, SF_2$) qui est fonction de l'historique de fonctionnement'exploitation du pot catalytique.

15. Procédé selon la revendication 13 ou 14, **caractérisé en ce qu'**une modification de la composition du des gaz d'échappement qui permet une transformation du réactif stocké est reconnaissable à un renversement de la tendance de développement de l'intégrale depar rapport au temps (SI) (9, 10).

16. Appareil de commande de moteur pour un moteur à combustion, **caractérisé en ce qu'**il est équipé adapté pour mettre en oeuvre un procédé selon une des revendications précédentes.

EP 1 761 693 B1

# Fig. 1

$$SI=\int[(\lambda-1)*M*C_1*SF_1]dt$$
$$(SI_n=SI_{n-1}+(\lambda-1)*M*C_1*SF_1*\Delta t)$$

$$SI=\int[(\lambda-1)*M*C_2*SF_2]dt$$
$$(SI_n=SI_{n-1}+(\lambda-1)*M*C_2*SF_2*\Delta t)$$

$\lambda>1?$

j (mager)   n (fett)

$SI>SI_{max}?$

$SI<SI_{min}?$

$SI:=SI_{max}$

$SI:=SI_{min}$

$SI_{n-1}<0?$

$SI_n>SI_{n-1}?$

$SI_n<SI_{n-1}?$

$SI_n<0?$

$\Delta T=0$

$SI_n>0?$

$\Delta T=(SI_n-SI_{n-1})*C_2*F_{11}*F_{21}$

$\Delta T=-SI_{n-1}*C_2*F_{11}*F_{21}$

$\Delta T=SI_{n-1}*C_2*F_{12}*F_{22}$

$\Delta T=(SI_{n-1}-SI_n)*C_2*F_{12}*F_{22}$

11

# Fig. 2

$$\widetilde{T}_{Kat,n} \text{ berechnen} \quad \text{—21}$$

$$\Delta T_n \text{ berechnen} \quad \text{—22}$$

$$T_{Kat,n} = \widetilde{T}_{Kat,n} + \Delta T_n \quad \text{—23}$$

$$\Delta T^*_{n+1} \text{ berechnen} \quad \text{—24}$$

$$25 \quad T^*_{Kat,n+1} = \widetilde{T}^*_{Kat,n+1} + \Delta T^*_{n+1}$$

$$26 \quad T^*_{Kat,n+1} > T_c ?$$

j

27 Kühlen

n

$$28 \quad T^*_{Kat,n+1} < T_s ?$$

j

29 Heizen

n

# Fig. 3

$T_{Kat,n}$ berechnen — 31

SI berechnen — 32

j — $SI_n < 0?$ — 33 — n

34 — $\Delta T'_n = -SI_n * C_2 * F'_{11} * F_{21}$     $T'_n = SI_n * C_2 * F'_{12} * F_{22}$ — 35

$T'_{Kat,n} = T_{Kat,n} + \Delta T'_n$ — 36

j — $T'_{Kat,n} > T_c?$ — 37

38 — Kühlen     n

39 — $T'_{Kat,n} < T_s?$ — j

n — Heizen — 40

# Fig. 4

```
                    o
           ┌──────────────────┐
           │ T̃_Kat,n  berechnen│──── 41
           └──────────────────┘
           ┌──────────────────┐
           │ ΔT_n  berechnen  │──── 42
           └──────────────────┘
           ┌──────────────────┐
           │ T_Kat,n = T̃_Kat,n + ΔT_n │──── 43
           └──────────────────┘
           ┌──────────────────┐
           │ T'_Kat,n berechnen│──── 44
           └──────────────────┘
    45 ──◇ T'_Kat,n > T_c ? ◇──j──  46 ┌──────────────┐
                                       │ "Gemischwech-│
              n                        │ sel sperren" │
                                       │ Flag setzen  │
                                       └──────────────┘
           ┌──────────────────┐
           │ λ_neu wählen     │──── 47
           └──────────────────┘
    48 ──◇ Ge-              ◇──j──
           mischwech-              ◇ Flag ──── 49
           sel?         ──n──  gesetzt ?
              n                        │
                                   ┌──────────────┐
                                   │ λ_neu := λ_alt│──── 50
                                   └──────────────┘
     51 ┌──────────────────┐
        │ ΔT*_n+1 berechnen │
     52 └──────────────────┘
        ┌──────────────────────┐
        │ T*_Kat,n+1 = T̃*_Kat,n+1 + ΔT*_n+1 │
        └──────────────────────┘
   54              53 ──◇ T*_Kat,n+1 > T_c ? ◇──j──
   ──◇ λ ≤ 1 ? ◇──                n
   j            n   56 ┌────────┐   57
  ┌──────┐       │Last-  │──  ──◇ T*_Kat,n+1 < T_s ? ◇──j── 58 ┌──────┐
  │λ ver-│──55   │rück-  │                                      │Heizen│
  │ringern│       │nahme │        n                             └──────┘
  └──────┘       └────────┘
     59 ┌──────────────────┐
        │ Gemisch zuführen │
        └──────────────────┘
              ◇──── 60
```

**EP 1 761 693 B1**

# IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19907382

- US 5414994 A